# EUROPEAN PATENT APPLICATION

(11) **EP 1 018 493 A1**
(43) Date of publication of application: **12.07.2000**
(21) Application number: 99923896.7
(22) Date of filing: 03.06.1999
(51) Int. Cl.: C03C 27/06, E06B 3/66

(54) **SPACER FOR GLASS PANEL**

(30) Priority: 08.06.1998 JP 15885898; 05.08.1998 JP 22134698; 05.08.1998 JP 22134798
(71) Applicant: Nippon Sheet Glass Co., Ltd., Osaka-shi, Osaka 541-0045 (JP)
(72) Inventor: HORIGUCHI, Naoto Nippon Sheet Glass Co., Ltd., Osaka-shi Osaka 541-0045 (JP); ASANO, Osamu Nippon Sheet Glass Co., Ltd., Osaka-shi Osaka 541-0045 (JP); OKAJIMA, Keiichiro Nippon Sheet Glass Co., Ltd., Osaka-shi Osaka 541-0045 (JP); MIURA, Tomonori Nippon Sheet Glass Co., Ltd., Osaka-shi Osaka 541-0045 (JP)
(74) Representative: Kaiser, Magnus, Dipl.-Phys.
(86) International application number: JP9902983
(87) International publication number: WO9964365

(57) **Abstract**

In a glass panel (P) including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition, a spacer is interposed between opposing faces (2A, 2B) of the glass sheets (1A, 1B) for maintaining the opposing faces (2A, 2B) with the predetermined distance therebetween. The spacer includes two or more curved faces (6) and is disposed still under a stable posture thereof and clamped between the pair of glass sheets (1A, 1B) so as to maintain the opposing faces (2A, 2B) with the predetermined distance therebetween.

## Description

### TECHNICAL FIELD

The present invention relates to a spacer for use in a type of glass panel including a pair of glass sheets disposed with a predetermined distance therebetween to form a gap and an outer periphery sealing portion provided along the entire peripheral edges of the glass sheets for sealing the gap under a depressurized condition, with a plurality of the spacers being interposed between the opposing faces of the glass sheets for maintaining the opposing faces with the predetermined distance.

### BACKGROUND ART

A conventional multiple glazing, which is an example of glass panel, employs e.g. spherical spacers. Such spherical spacer provides a constant fixed height regardless of its posture. Then, the above construction utilizes this property for maintaining the distance between the glass sheets constant.

However, while the conventional spacer described above can readily maintain the constant fixed height, it lacks stability as it can roll very easily. For this reason, when it is attempted to dispose this spacer at a predetermined position on the opposing face of the glass sheet, it will roll even with a slight inclination of this glass sheet. Accordingly, there would occur inconvenience of impaired appearance of the multiple glazing when such multiple glazing is employed for a showcase, window pane, etc.

Therefore, in the assembly of the conventional multiple glazing, separate means would be required for disposing the spacer at a predetermined position.

Further, if the diameter of the spacer is reduced in order to reduce the predetermined distance of the gap, this will result in reduction of the curvature radius of its portions which come into contact with the opposed glass sheets, so that such spacer will come into contact with the glass sheets with its sharp edge portions thereof. In this case, when the contact pressure is increased due to application of an external pressure to the multiple glazing, there will occur local warping in the glass sheets, which warping tends to invite Hertzian crack.

Moreover, if the dimensional accuracy of the spherical spacer is insufficient, those spacers formed with smaller diameters will fail to come into contact with the opposing faces of the glass sheets. Also, if the accuracy of flatness of the opposing faces of the glass sheets is poor, some spacers will fail to come into simultaneous contact with the opposing faces of the glass sheets even though the dimensional accuracy of the spacers is high.

As a result, the spacers may be displaced after the assembly of the multiple glazing, thus inviting the problems of deterioration of appearance of the multiple glazing or damage at a certain portion of the glass sheets as being subjected to excessive stress concentration from the contact with the spacer.

Therefore, an object of the present invention is to provide a spacer for a glass panel, which can hardly be displaced once being disposed at a predetermined position on the opposing faces of the glass sheets to as to maintain the opposing faces of the glass sheets constant even when these opposing faces of the glass sheets are not formed as perfectly flat faces or when the glass panel is warped due to an external force and which can also avoid contact between its sharp edge and the glass sheets, thus preventing damage to the glass sheets.

### DISCLOSURE OF THE INVENTION

The characterizing features of a spacer S for a glass panel P, according to the present invention, are as follows.

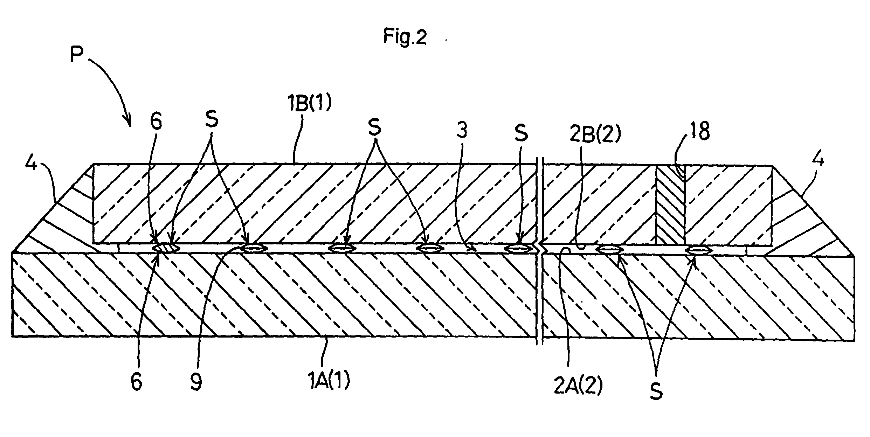

A spacer S for a glass panel P, relating to claim 1, is formed of two curved faces 6 as shown in FIG. 2, the spacer being disposed still under a stable posture thereof and damped between a pair of glass sheets 1A, 1B so as to maintain opposing faces 2A, 2B of the these glass sheets with a predetermined distance therebetween.

Incidentally, this spacer S has a shape having a stable posture, and such stable posture is defined herein as a condition where the height from the center of gravity of this spacer S as disposed on a horizontal surface may remain high whichever direction the spacer S may pivot from the stable posture.

In case the curved faces 6 comprise convex faces 6a, the spacer may assume such stable posture if the distance from its center of gravity to each curved face 6 along the perpendicular direction is smaller than the curvature of radius of this curved face 6. Incidentally, even when the convex curved face 6a is a non-spherical face, as a small portion of the curved face 6 may be approximated to a spherical face, the curvature radius of such approximate spherical portion will be defined here as the curvature radius of this portion.

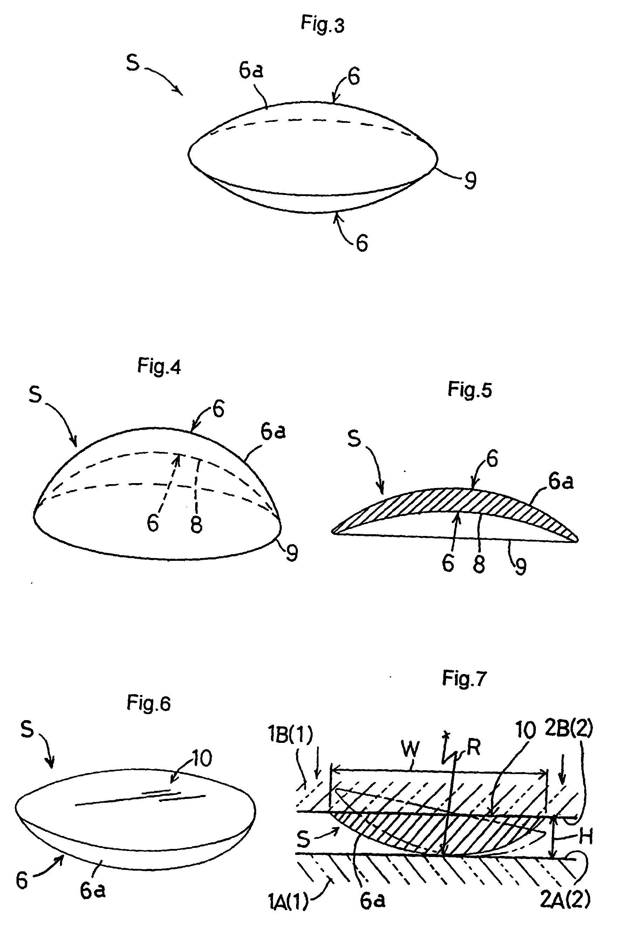

In case the curved faces 6 comprise concave faces, as shown in FIGS. 4 and 5 for example, the other portion thereof than the peripheral edge 9 does not come into contact with the horizontal surface, so that the stable posture will be the condition where the spherical edge 9 is placed in contact with the horizontal surface.

With these constructions, the spacer S may maintain the distance between the opposing faces 2A, 2B of the glass sheets 1A, 1B constant while the spacer S can be retained at the disposed position in a stable manner without rolling therefrom. That is, referring to the example shown in FIG. 3, the spacer S is shaped such that it comprises the assembly of a pair of partial spheres which have planar cut faces of a same radius, the partial spheres being bonded together through these planar cut faces thereof. In this case, the spacer S is hardly supported through its peripheral edge 9, but it rather is supported through its convex face 6a on the opposing face 2A of the glass sheet 1. And, the spacer assumes its stable posture in a condition where the centers of the convex faces 6a and the gravity center of the spacer S are located on the perpendicular line, when the peripheral edge 9 is located substantially at the midpoint between the opposing faces 2A, 2B.

The height perpendicular to the cut face is the minimum height of the spacer S. And, by forming the spacers S with a same dimension, the heights thereof under the stable postures are rendered uniform. Hence, when these spacers S are damped between the glass sheets 1A, 1B, the distance between their opposing faces 2A, 2B may be maintained constantly fixed.

In the case of a spacer S for a glass panel P relating to claim 2, as shown in FIG. 3, the spacer S having the characterizing feature of claim 1 includes two convex faces 6a and its thickness is smaller than twice the curvature radius of one convex face 6a.

With this construction, in addition to the above-described function/effect achieved by the spacer S of claim 1, the distant between the opposing faces 2A, 2B of the glass sheets 1A, 1B may be maintained constant while the spacer S is prevented from rolling and maintained in a stable manner at its disposed position.

That is, the spacer S as shown comprises the assembly of a pair of partial spheres bonded together through cut faces thereof which are cut as planar circular faces of a same diameter, the cut faces being located outwardly of the center of the sphere. Accordingly, the height in the direction perpendicular to the cut face is smaller than the diameter of the circular peripheral edge 9. As a result, the spacer assumes the stable posture where the gravity center of the spacer S and the centers of the convex faces 6a are located on the perpendicular line.

In the case of a spacer S for a glass panel P relating to claim 3, as shown in FIGS. 6 and 7, the spacer S comprises the assembly of a planar portion 10 and a convex face 6a which extends continuously from the outer periphery of the planar portion 10. When this spacer S is disposed still under its stable posture and clamped between the glass sheets 1A, 1B, the planar portion 10 comes into contact with one of the opposing faces 2A, 2B. Incidentally, if this spacer S is formed of a partial sphere, the convex face 6a will be formed as a convex spherical face.

With the above construction, when the spacer S is clamped between the glass sheets 1A, 1B, the spacer assumes its stable posture as the planar portion 10 comes into contact with one of the opposing faces 2A, 2B. Accordingly, the spacer S may be clamped between the glass sheets 1A, 1B under the fixed posture constantly.

For instance, as shown FIGS. 6 and 7, when the convex spherical face of the spacer S is supported by one glass sheet 1A, the spacer S assumes its stable posture where the gravity center of the spacer S and the center of the convex spherical face are aligned with the perpendicular direction, when the planar portion 10 of the spacer S is oriented horizontally. Hence, when the other glass sheet 1B is subsequently superposed thereon, the planar portion 10 of the spacer S comes into contact with the other opposing face 2A, 2B in a reliable manner.

With this construction, by forming the height dimension of the spacer S with high precision, the opposing faces 2A, 2B may be maintained with a predetermined distance therebetween.

Incidentally, in case the planar portion 10 of the spacer S is supported on the one opposing face 2A from the beginning, the convex spherical face will come into contact with the other opposing face 2A, 2B. Needless to say, in this case too, the opposing faces 2A, 2B may be maintained with a predetermined distance therebetween.

According to a spacer S for a glass panel P relating to claim 4, as shown in FIGS. 6 and 7, the height H between the planar portion 10 of the characterizing feature of claim 3 and the top of the convex faces 6a is rendered smaller than 1/2 of the width W of the planar portion 10. For example, if this spacer S is formed of partial spheres, the height H will be rendered smaller than the radius R of the sphere.

If the height H between the planar portion 10 and the top of the convex faces 6a is rendered smaller than 1/2 of the width W of the planar portion 10 as this construction, the distance between the gravity center of the spacer S and its top is even shorter than 1/2 of the width W of the planar portion 10.

Supposing now the spacer S is disposed with its convex portion 6a in contact with one of the opposing faces 2A, 2B, when an external force is applied to this spacer S to tend to pivot it, the contacting position of the convex face 6a to the one opposing face 2A will be displaced. However, at the same time, the distance between this contacting position and the gravity center will be increased sharply, thereby to apply a strong restoring force to the spacer S.

Therefore, in the case of the present construction, the posture of the spacer S may be more stabilized, so that the spacer S may be supported between the glass sheets 1A, 1B reliably to maintain the distance between the glass sheets 1A, 1B to the height H.

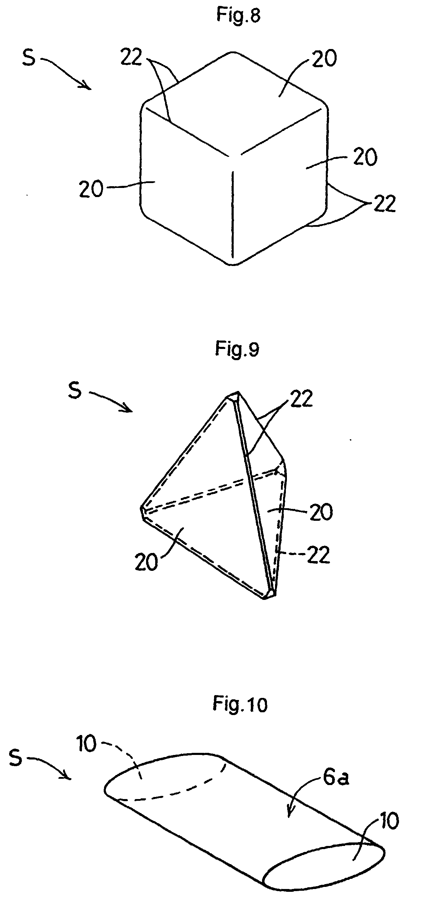

According to a spacer S for a glass panel P relating to claim 5, as shown in FIG. 8, the spacer S is provided in the form of a regular polyhedron.

The term: "regular polyhedron" is defined herein as representing not only all regular polyhedrons themselves, but also regular polyhedrons with any sides or portions thereof cut or chamfered. For example, this is to include one with its edge cut or chamfered flat or one with its edge or a portion of the edge curved or so-called "R-chamfered". The term is meant to include also one with its each side 20 or a portion of the side formed convex or slightly projected as well as one with its each side 20 or a portion of the side formed concave or recessed. For instance, FIG. 8 illustrates a spacer S provided in the form of the regular hexahedron with its each edge R-chamfered.

This construction allows the spacer S to be disposed under the stable posture and also allows the opposing faces 2A, 2B to be maintained to the predetermined distance therebetween.

That is to say, such regular polyhedron assumes a stable posture where any one of its sides is placed in contact with the supporting, i.e. horizontal face. Under this condition, the height from the horizontal face is constant. Further, since such regular polyhedron has lower tendency for rolling as compared with other three-dimensional objects having curved faces, inadvertent displacement of the spacer S after its disposing may be prevented.

The spacer S shown in FIG. 8 has its each side R-chamfered, but this will not assure its stable posture on its R-chamfered face 22. Rather, its height on the opposing face 2A of the glass sheet 1 will remain constant to correspond to the predetermined distance. Moreover, as the spacer comes into contact with the opposing faces 2A, 2B through its respective planar portions 10. Hence, when an external force is applied to the glass sheets 1A, 1B, it is possible to prevent stress concentration from the spacers S to the opposing faces 2A, 2B of the glass sheets 1A, 1B.

According to a spacer S for a glass panel P relating to claim 6, as shown in FIG. 9, the spacer is provided in the form of a regular tetrahedron. This regular tetrahedron has the smallest number of faces among the regular polyhedrons, hence the least tendency of rolling.

With this construction, when one glass sheet 1A disposing the spacer S thereon is inclined to some degree, this spacer S may remain mounted under the stable posture. Further, as the spacers S disposed under the stable posture have the constant fixed height, the opposing faces 2A, 2B may be readily maintained to the predetermined distance therebetween.

Incidentally, in the case of the spacer S shown in FIG. 9, each side thereof is chamfered flat so as to restrict its chipping off and also each apex is chamfered so as to restrict stress concentration to the glass sheets 1A, 1B.

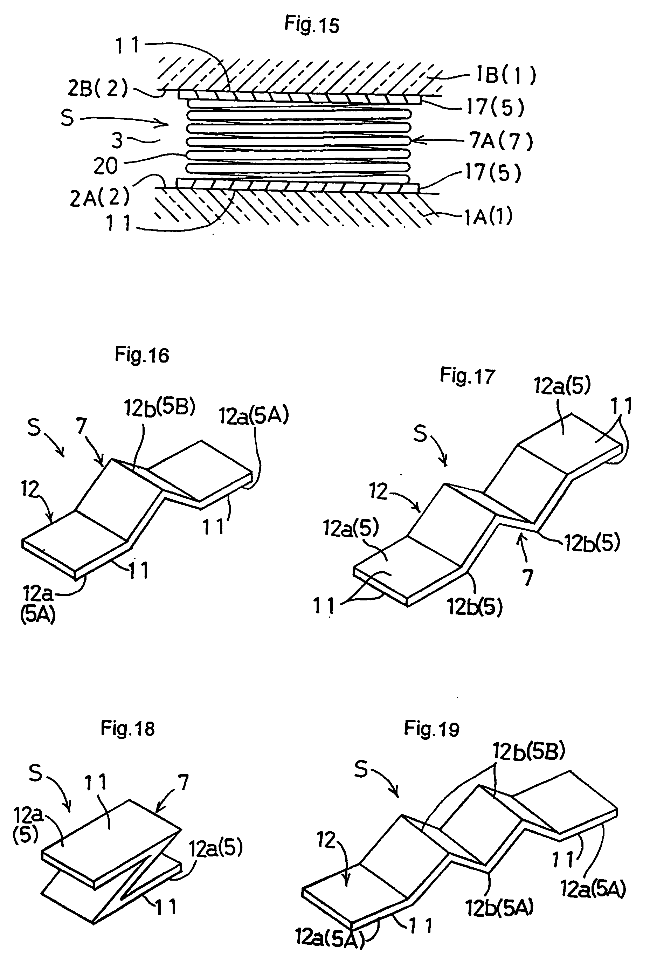

According to a spacer S for a glass panel P relating to claim 7, as shown in FIG. 15, the spacer includes a pair of contacting portions capable of coming into contact with the opposing faces 2A, 2B respectively, and an elastic portion 7 interposed between the pair of contacting portions 5, the elastic portion 7 being compressible in the mutually approaching direction of the two contacting portions 5.

For example, the contacting portions 5 will be formed as contacting plate members 17 which respectively come into contact with the opposing faces 2A, 2B of the glass sheets 1A, 1B. Such each contacting plate member 17 includes a glass-sheet contacting face 11; and the elastic portion 7 will be provided as a coil spring 7A interposed between these two contacting plate members 17.

In the case of this construction, since the elastic portion compressible in the mutually approaching direction is provided to the contacting portions, even when the flatness of the opposing faces 2A, 2B of the glass sheets 1A, 1B is insufficient, the elastic force of the elastic portion may cause the respective contacting portions to contact the opposing faces 2A, 2B.

In addition, even when there occurs relative displacement between the opposing faces 2A, 2B due to effect from an external force applied to the glass panel P, the compression reaction force of the elastic portion allows the two contacting portions to follow such displacement.

Accordingly, with the present construction, in case the distance between the two contacting faces is not uniform or when the glass sheets 1A, 1B are displaced relatively to each other in the direction along the contacting faces, displacement of the spacers S may be effectively prevented, and excessive reaction force to the opposing faces 2A, 2B may be prevented also.

Moreover, when the coil spring 7A is compressed maximally, the spacer S may still function to regulate the distance between the opposing faces 2A, 2B.

According to a spacer S for a glass panel P relating to claim 8, as shown in FIGS. 16-19, said elastic portion is provided as a bent planar member formed of elastic material.

Specifically, this elastic portion 7 may be a planar member 12 which is bent in V shape (see FIG. 16), or in N shape (see FIG. 17), or in Z shape (see FIG. 18), or in W shape (see FIG. 19), etc.

With this construction, like the construction relating to claim 7 above, inadvertent displacement of the spacer S may be effectively prevent in the event of the presence of non-uniform distance between the two contacting faces or of the relative displacement along the contacting faces; and excessive reaction force to the opposing faces 2A, 2B of the glass sheets may be avoided also.

For example, in the case of the construction shown in FIG. 16, with any one of the shapes mentioned above, the bent angle of the bent portion 12b is varied elastically and also the planar portion 12a is elastically flexed. Therefore, as long as the spacer is disposed with the compressive deformation in the approaching direction of the opposing faces 2A, 2B, the contacting portions 5 will be pressed, by the reaction force from this compressive deformation, against the opposing faces 2A, 2B in response to slight displacement between the opposing faces 2A, 2B. Hence, even when an external force is applied to this glass panel P under this condition to vary the distance between the opposing faces 2A, 2B, this can be coped with.

In addition, when the planar portions 12 are rendered almost flat or pressed against and superposed to one another, no further deformation will occur. Therefore, this can function as a spacer S for regulating the distance between the opposing faces 2A, 2B.

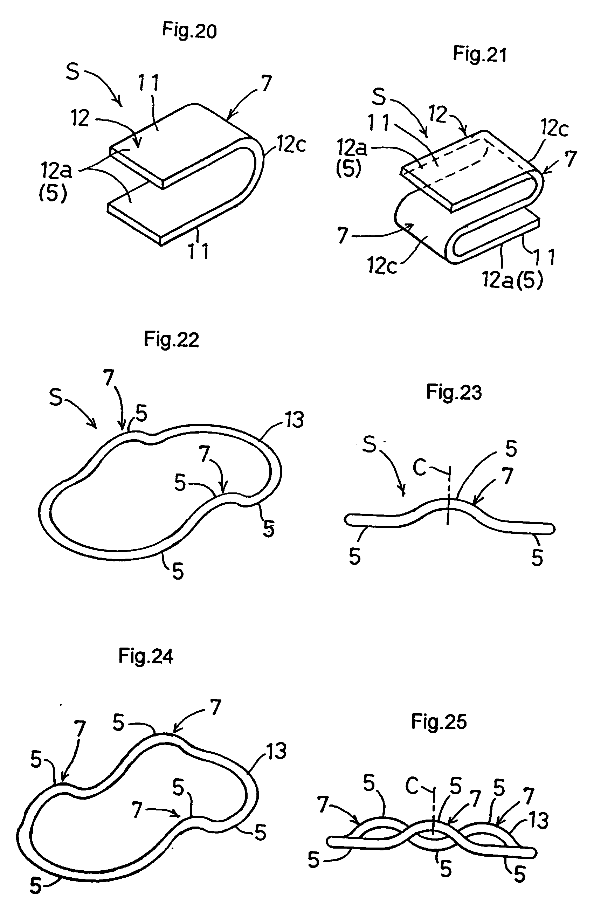

According to a spacer S for a glass panel P relating to claim 9, as shown in FIGS. 20 and 21, said elastic portion is provided as a curved planar member made of elastic material.

For example, the elastic portion 7 to be interposed between the contacting portions 5 is provided as a planar member 12 made of elastic material and curved, thus forming the spacer S. This spacer S may be in the form of U shape (see FIG. 20), or S shape (see FIG. 21), etc.

In the case of the present construction, the spacer S functions as a spring. Then, in the event of possible non-uniformity of the distance between the two contacting faces or relative displacement between the glass sheets 1A, 1B along the contacting faces, the contacting portions 5 will reliably be pressed and contacted against the opposing faces 2A, 2B. For this reason, in the even of possible variation in the distance between the opposing faces 2A, 2B due to application of an external force to the glass panel P, the contacting portions 5 can follow this displacement. Consequently, inadvertent displacement of the spacer S or excessive resistance force to the opposing faces 2A, 2B of the glass sheets may be prevented.

Moreover, since the curved portions 12c cannot be compressively deformed beyond the fixed range, this can function also as a spacer S for regulating the distance between the opposing faces 2A, 2B.

According to a spacer S for a glass panel P relating to claim 10, as shown in FIG. 22 and FIG. 23, said elastic portion employed in the characterizing construction of claim 7 above is provided as an annular member which is elastically deformable in the direction of the center axis thereof.

In the case of the present construction, for instance, the annular member 13 includes, at two peripheral portions thereof, vertically curved portions 13a which are elastically deformable in the direction of its center axis C, so that elastic portions 7 are provided in the form of these vertically curved portions 13a formed between the contacting portions 5.

With this construction, in the event of possible non-uniformity of the distance between the two contacting faces or relative displacement between the glass sheets 1A, 1B along the contacting faces, the annular member 13, due to its urging force, may come into contact with the opposing faces 2A, 2B and may also follow these opposing faces 2A, 2B. Therefore, inadvertent displacement of the spacer S and excessive resistance force to the opposing faces 2A, 2B of the glass sheets may be prevented effectively.

Moreover, since the opposing faces 2A, 2B cannot approach each other at least beyond the thickness of the annular member 13 in the direction of its center axis C, this can function as a spacer S for regulating the distance between the opposing faces 2A, 2B.

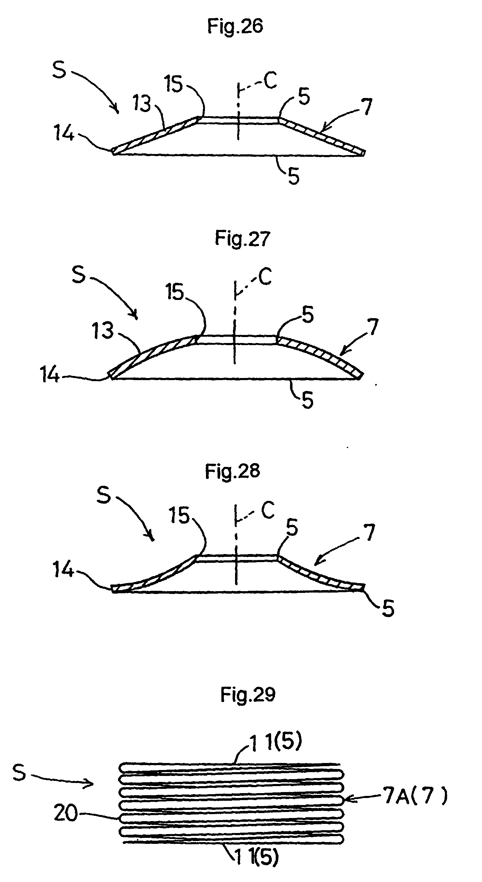

According to a spacer S for a glass panel P relating to claim 11, as shown in FIGS. 26-28, the annular member 13 is provided as an annular flat plate made of elastic material and including an outer peripheral portion 14 and an inner peripheral portion 15 which is offset in the direction of the center axis C relative to the outer peripheral portion 14.

The spacer S of the above construction may be provided in the form of a belleville spring. For instance, as shown in FIG. 26, the spacer may include a conical peripheral face having a top face whose outer periphery is formed by the inner peripheral portion 15 and a bottom face whose outer periphery is formed by the outer peripheral portion 14. Alternatively, this spacer may be formed by curving the flat plate in the direction of vertical section as shown in FIG. 27 and FIG. 28.

With this construction, in the event of possible non-uniformity in the distance between the opposing faces 2A, 2B or relative displacement between the glass sheets 1A, 1B in the direction along the opposing faces 2A, 2B, the spacer S will function as a belleville spring. For this reason, even when the flatness of the opposing faces 2A, 2B is insufficient, the contacting portions 5 consisting of the inner peripheral portion 15 and the outer peripheral portion 14 may be brought, due to their urging forces, against the opposing faces 2A, 2B. Consequently, when there occurs relative displacement between the opposing faces 2A, 2B due to the effect of an external force applied to the glass panel P, the compression reaction force of the elastic portion allows the two contacting portions to follow this.

As described above, with the spacer S having the present construction, inadvertent displacement of the spacer S and excessive resistance force to the opposing faces 2A, 2B of the glass sheets 1A, 1B may be prevented. Further, even when the distance between the contacting portions 5 is reduced, this reduced distance will still be greater than the thickness of the flat plate, so that the construction can function as a spacer S for maintaining the distance between the opposing faces 2A, 2B.

According to a spacer S for a glass panel P relating to claim 12, as shown in FIG. 29, said elastic portion 7 is formed by curving a wire member 23 made of elastic material and curved in the form of a coil. For example, this spacer S may be provided as a cylindrical reel spring. In this case, the contacting portions 5 of this spacer S may be formed of such contacting plates 17 as shown in FIG. 15 hereinbefore.

With this construction, in the event of possible non-uniformity in the distance between the opposing faces 2A, 2B or relative displacement between the glass sheets along the direction of the opposing faces 2A, 2B, the wire member which is curved in the form of coil and made of elastic material will function as a spring having elasticity in the direction of its spiral axis. For this reason, even when the flatness of the opposing faces 2A, 2B is insufficient, the elastic spring force of the elastic portion 7 may cause the respective contacting portions 5 to elastically come into contact with the opposing faces 2A, 2B. Moreover, even when there occurs relative displacement between the opposing faces 2A, 2B due to the effect of an external force applied to the glass panel P, the compression reaction force of the elastic portion will allow the two contacting portions to follow this. As a result, inadvertent displacement of the spacer S and excessive resistance force to the opposing faces 2A, 2B of the glass sheets 1A, 1B may be prevented effectively.

In the case of the present construction too, the spacer S will not be compressively deformed below the predetermined height, so that this construction functions as a spacer S for regulating the distance between the opposing faces 2A, 2B.

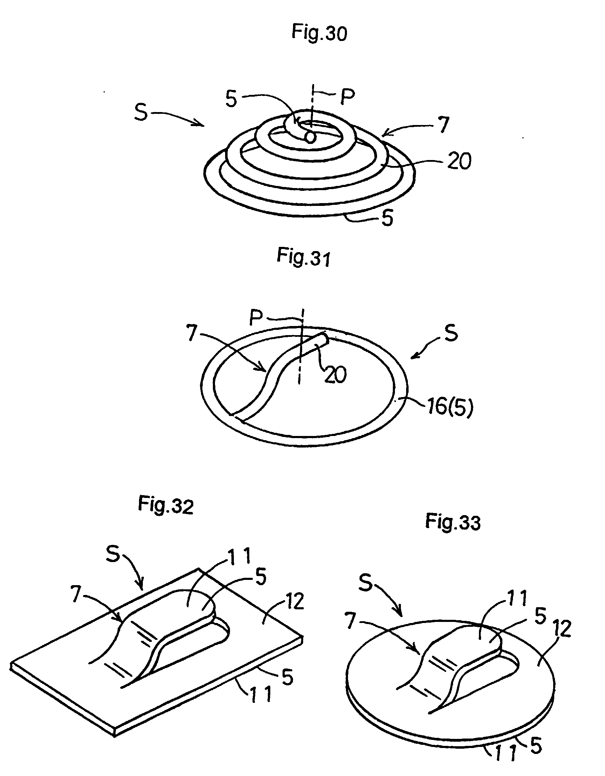

According to a spacer S for a glass panel P relating to claim 13, as shown in FIG. 30, the spacer is provided as a wire member 23 made of elastic material and curved in the form of a coil which has a progressively reduced turning radius in one direction along the spiral axis P.

For instance, the spacer S of this construction may be constructed from a conical spring. In particular, it is preferred that the turning radius of the spacer vary in the peripheral direction in such manner as to avoid mutual interference between a turn of the wire member 23 with the next turn of the same when the spacer S is compressed in the direction of center axis P.

With this construction, it is possible to maintain narrow the distance between the opposing faces 2A, 2B. That is, the wire member made of elastic material and curved in the form of coil functions as a spring having elasticity in the coil axis direction. Therefore, even when the flatness of the opposing faces 2A, 2B of the glass sheets 1A, 1B is insufficient, the spring force of the elastic portion may allow the contacting portions to come into contact with the opposing faces 2A, 2B.

Further, even when there occurs relative displacement between the opposing faces 2A, 2B due to application of an external force to the glass panel P, the compression reaction force of the elastic portion allows the contacting portions to follow this. Moreover, its wire member is curved in the form of a coil which has a progressively reduced turning radius in one direction along the spiral axis. Hence, if the turning radius of the next turn is adapted to be located inside the previous turn of the coiled wire member, the thickness of the spacer when compressed will be same as the thickness of the wire member. Accordingly, the distance between the opposing faces 2A, 2B may be narrow and at the same time, however the spacer is disposed on the opposing faces 2A, 2B of the glass sheets, the spacer will assume such posture that its contacting portions contact the contacting faces.

Moreover, since the distance between the contacting portions 5 can not be reduced below the thickness of the wire member 23 along the direction of the center axis P, the construction can function as a spacer S for maintaining the distance between the opposing faces 2A, 2B.

According to a spacer S for a glass panel P relating to claim 14, as shown in FIG. 15, the contacting portions 5 recited in the characterizing constructions of claims 7 through 13 are formed of contacting plate members 17 having glass-sheet contacting faces 11 capable of coming into contact with the one opposing face 2A, 2B.

For example, in the case of the spacer S of this construction, the contacting plate members 17 will be provided at the ends of the elastic portion 7, so as to form the contacting portions 5. And, the contacting plate members 17 will be provided with the glass-sheet contacting faces 11 capable of coming into contact with the opposing faces 2A, 2B. With this construction, regardless of the shape of the elastic portion 7, the contacting portions 5 may come into face contact with the opposing faces 2A, 2B.

With this construction, the contacting portions 5 are formed of the contacting plate members 17. Then, there may be provided a large contact area between the spacer S and the respective glass sheets 1A, 1B. As a result, stress concentration to the glass sheets 1A, 1B may be alleviated, thus preventing damage, e.g. Hertzian crack, to the glass sheets 1A, 1B.

According to a spacer S for a glass panel P relating to claim 15, as shown in FIG. 31, the contacting portion of the characterizing constructions of claims 7 through 13 above is formed of an annular contacting member 16 which comes into contact with the one opposing face 2A, 2B through the entire periphery thereof.

In the case of the spacer S of this construction, for instance, the one contacting portion 5 may be formed of an annular contacting member 16 capable of coming into contact with the opposing faces 2A, 2B through the entire periphery thereof and the other contacting portion 5 may be formed of a wire member 23 which extends inwardly from the annular contacting member 16 and which is curved to be displaced in the direction of center axis P of the annular contacting member 16. Incidentally, the wire member 23 forms the elastic portion 7 and it is preferred that its length be contained within the inner diameter of the annular contacting member 16.

With the present construction, the contacting portion of the spacer S is formed of the annular contacting member 16 capable of coming into contact with the opposing faces 2A, 2B through the entire periphery thereof. Hence, stress concentration to the glass sheets may be alleviated and damage of the glass sheets may be prevented.

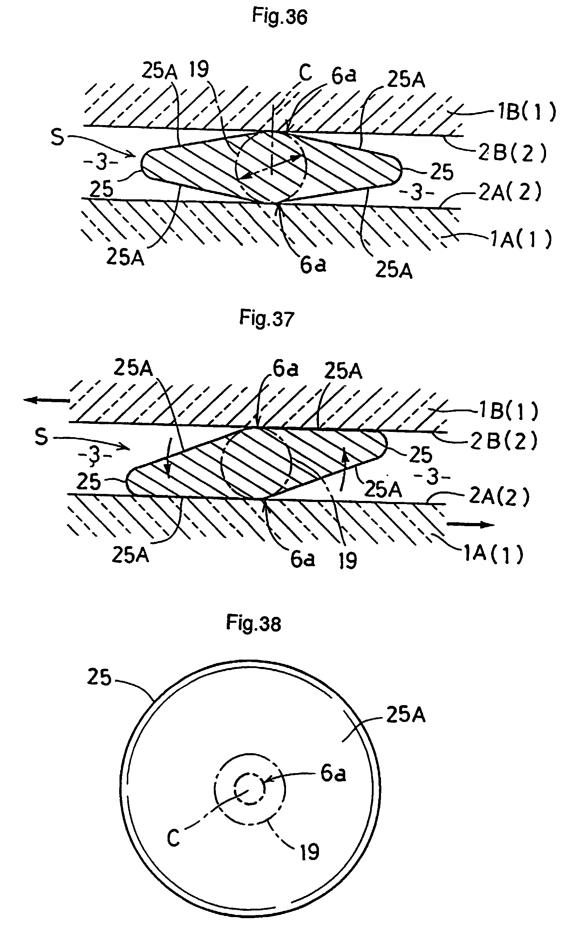

According to a spacer S for a glass panel P relating to claim 16, as shown in FIG. 36, the spacer includes a pair of convex faces 6a coming into contact with the respective opposing faces 2A, 2B, and as the spacer is clamped between the glass sheets 1A, 1B with the two convex faces 6a contacting the respective opposing faces 2A, 2B, the spacer is pivotable while maintaining the opposing faces 2A, 2B with the predetermined distance therebetween.

In the case of the spacer S of this construction, when there occurs relative displacement between the glass sheets 1A, 1B in the direction along the opposing faces 2A, 2B, this causes shift in the contacting positions between the respective convex faces 6a acting as the contacting plate members 17 and the respective opposing faces 2A, 2B (see FIG. 37). Therefore, there occurs no slippage between the spacer S and the glass sheets 1A, 1B.

This construction permits the relative displacement along the opposing faces 2A, 2b without slippage between the opposing faces 2A, 2B and the contacting portions. In this case, as no shearing strain occurs in the spacer S and no external force is applied to the opposing faces 2A, 2B of the glass sheets along these opposing faces 2A, 2B, it is possible to restrict development of excessive strain within the glass sheets.

As a result, the disposing operation of the spacer S on the opposing faces 2A, 2B of the glass sheets may be facilitated, while preventing damage to the glass sheets and the spacer S per se. In addition, since the spacer includes the two convex portions 6a, free rolling of the spacer S may be restricted to facilitate the disposing operation of the spacer on the opposing faces 2A, 2B and also to restrict subsequent inadvertent displacement of the spacer S.

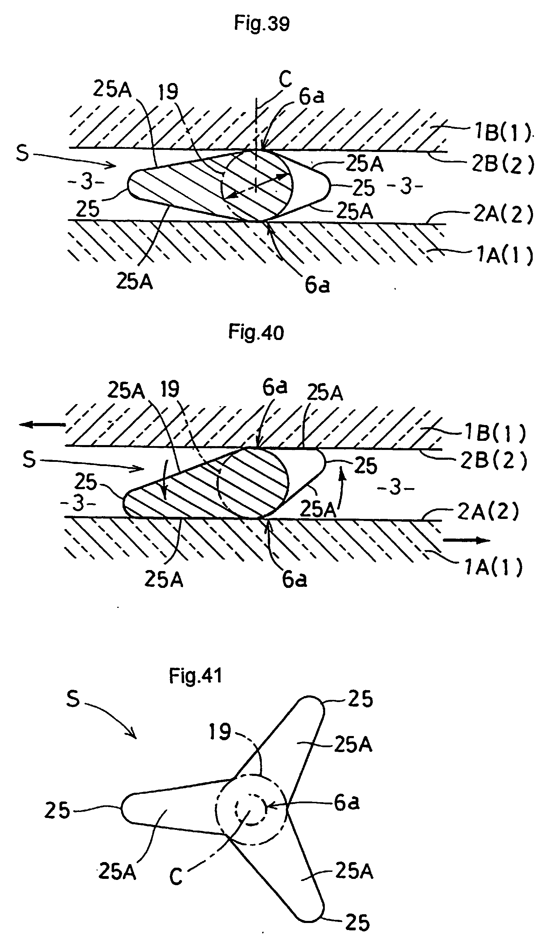

According to a spacer S for a glass panel P relating to claim 17, as shown in FIG. 39, the spacer includes a pair of upper and lower convex portions 6a which form portions of a same sphere and a bulging portion 25 which projects in a direction intersecting the center axis C extending through the upper and lower convex portions 6a, the thickness of the bulging portion in the direction of the center axis being smaller than the diameter of the sphere. In this respect, the projecting direction of the bulging portion 25 need not necessarily be perpendicular to the center axis C.

If the two convex portions 6a forming portions of a same sphere come into contact with the opposed faces 2A, 2B as the above construction, the distance between the opposed faces 2A, 2B may be maintained fixed even when the spacer S is pivoted. Moreover, the bulging portions may restrict rolling of the spacer S, thus facilitating the disposing operation of the spacer S on the opposing faces 2A, 2B of the glass sheets.

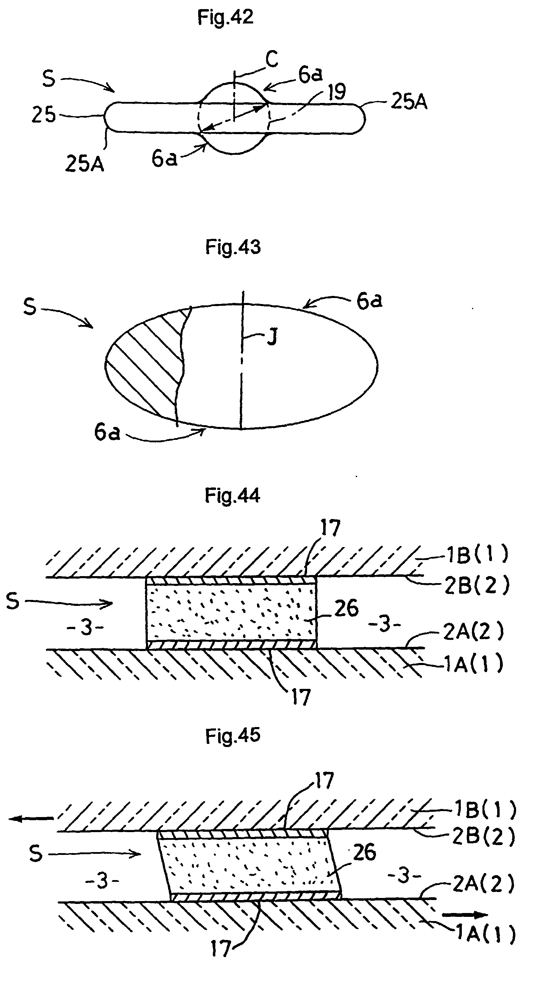

According to a spacer S for a glass panel P relating to claim 18, as shown in FIG. 42, the bulging portion 25 of the characterizing feature of claim 17 is formed of an inclined portion 25A which extends integrally with the convex portions 6a about the center axis C over the entire periphery thereof.

With the above construction, the bulging portion is formed along the entire periphery around the center axis to provide the inclined portion 25A, so that this inclined portion 25A may restrict tilting of the spacer S. Also, since the inclined portion 25A as the bulging portion 25 is formed integrally with the two convex portions 6a over the entire periphery thereof, it has high strength so as to restrict occurrence of breakage in the bulging portion 25. As a result, this spacer S may be handled easily.

According to a spacer S for a glass panel P relating to claim 19, as shown in FIG. 43, the spacer is provided in the form of a spheroid.

Such spheroid is a pivotable shape, so that with pivotal movement of the spacer S, relative displacement between the opposing faces 2A, 2B of the glass sheets 1A, 1B is permitted. Moreover, since this spacer S has less tendency of rolling, the disposing operation of the spacer S onto the opposing faces 2A, 2B may be facilitated.

As described above, with the spacer S of this construction, it is possible to facilitate its disposing operation on the opposing faces 2A, 2B of the glass sheets 1A, 1B, while preventing damage to the glass sheets 1A, 1B and the spacer S per se.

According to a spacer S for a glass panel P relating to claim 20, as shown in FIGS. 44 and 45, the spacer includes a pair of contacting plate members 17 for coming into contact with the opposing faces 2A, 2B of the glass sheets 1A, 1B respectively and a deformation allowing member 26 interposed between the contacting plate members 17 for allowing relative displacement between the opposing faces 2A, 2B along these faces thereof. For example, the deformation allowing member 26 will be formed to be capable of shearing deformation in association with relative displacement between the contacting plate members 17.

If the deformation allowing member is provided as in the present construction, when the opposing glass sheets 1A, 1B are displaced relative to each other in the direction along the opposing faces 2A, 2B, the deformation allowing member will be deformed by the shearing force so as to allow the relative displacement between the opposing glass sheets 1A, 1B. In this case, the relative displacement between the opposing glass sheets 1A, 1B in the direction along the opposing faces 2A, 2B is allowed without substantial change in the distance between the contacting portions and without causing shearing strain in the glass sheets 1A, 1B. As a result, both the spacer S and the two glass sheets 1A, 1B may be protected from damage.

According to a spacer S for a glass panel P relating to claim 21, as shown in FIG. 44 and FIG. 45, the deformation allowing member of the characterizing feature of claim 20 is formed of a transverse elastic member. For instance, with the spacer S of this construction, the deformation allowing member 26 formed of the transverse elastic member is interposed between the two contacting plate members 17.

With this construction, if the transverse elastic coefficient of the deformation allowing member 26 is set small, the shearing resistance against the relative displacement between the glass sheets 1A, 1B may be reduced.

Further, with the shearing deformation of this transverse elastic member, the distance between the contacting portions will not be varied substantially. Therefore, in the event of possible relative displacement between the glass sheets 1A, 1B in the direction along the opposing faces 2A, 2B, it is possible to prevent shearing strain from occurring in the glass sheets 1A, 1B.

Incidentally, since the transverse elastic member has an elastic resilience, when the spacer S is interposed between the opposing faces 2A, 2B, this interposing operation may be readily carried out while maintaining the spacer S under the neutral condition.

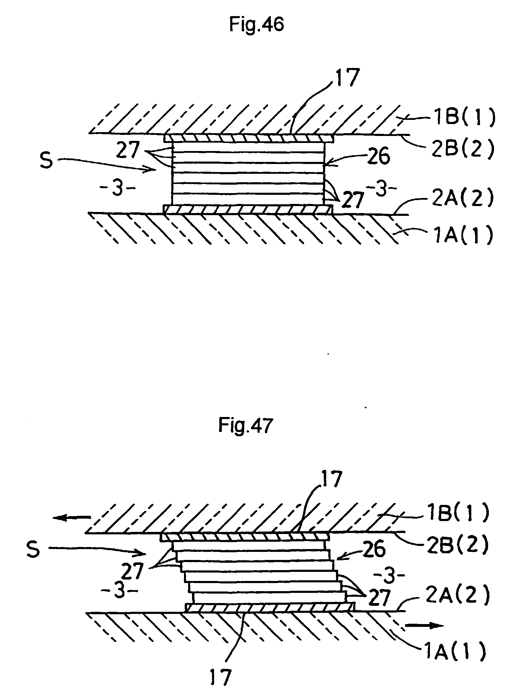

According to a spacer S for a glass panel P relating to claim 22, as shown in FIG. 46 and FIG. 47, the deformation allowing member 26 of the characterizing feature of claim 20 above is provided as planar members 27 formed of rigid material and superposed to be movable relative to one another between the contacting plate members 17.

With this construction, the deformation allowing member is constructed of the planar members 27 formed of rigid material and slidably superposed one another between the contacting plate members 17. Then, these planar members 27 may be displaced relative to one another along the opposing faces 2A, 2B. And, the reaction force occurring during this displacement may be set small easily and the distance between the contacting plate members 17 does not vary during the displacement. Therefore, there will not occur shearing strain inside the glass sheets 1A, 1B, so that the glass sheets 1A, 1B and the spacer S may be protected from damage.

Incidentally, preferably, the two contacting plate members 17 will be connected to each other, with the superposed planar members 27 being interposed therebetween. For instance, by forming a hole in each planar member 27 and providing a connecting member within this hole for interconnecting the contacting plate members 17, the spacer S may provide its function reliably.

### BRIEF DESCRIPTION OF THE DRAWINGS

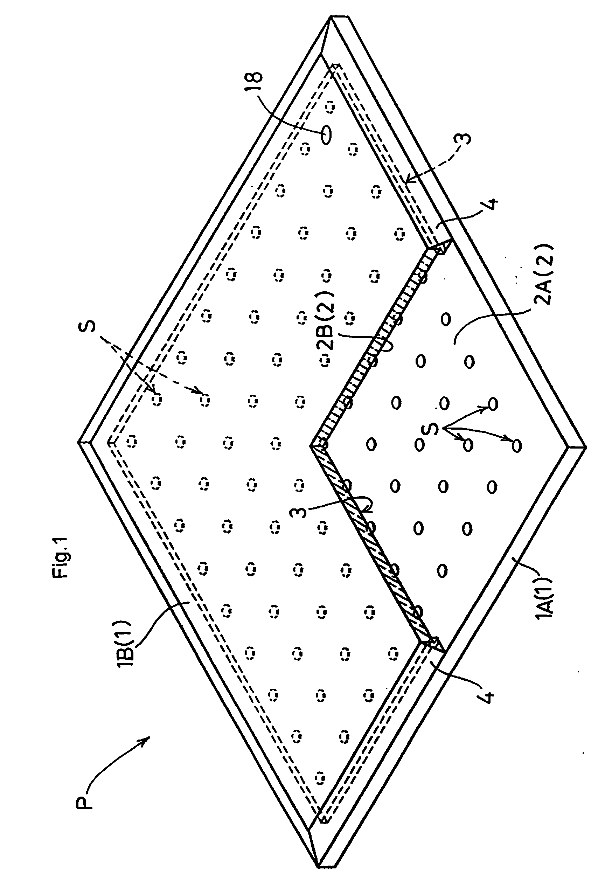

FIG. 1 is a partially cutaway perspective view showing an example of a glass panel relating to a first embodiment of the present invention,
FIG. 2 is a vertical section in side view of a spacer relating to the first embodiment,
FIG. 3 is a perspective view showing an example of the spacer relating to the first embodiment,
FIG. 4 and FIG. 5 are explanatory views showing a further spacer,
FIG. 6 and FIG. 7 are explanatory views showing a further spacer,
FIGS. 8 through 12 are perspective views showing still further spacers relating to the first embodiment,

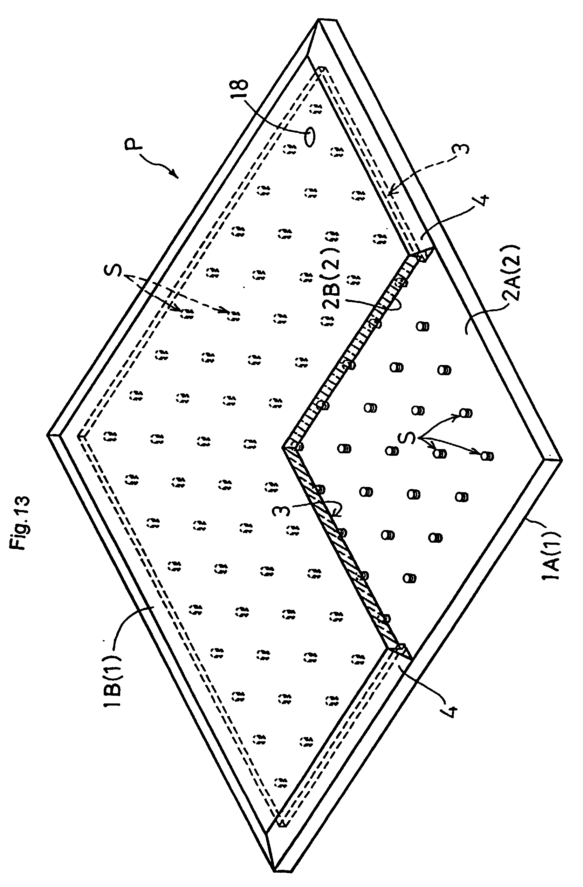

FIG. 13 is a partially cutaway perspective view showing an example a glass panel relating to a second embodiment,

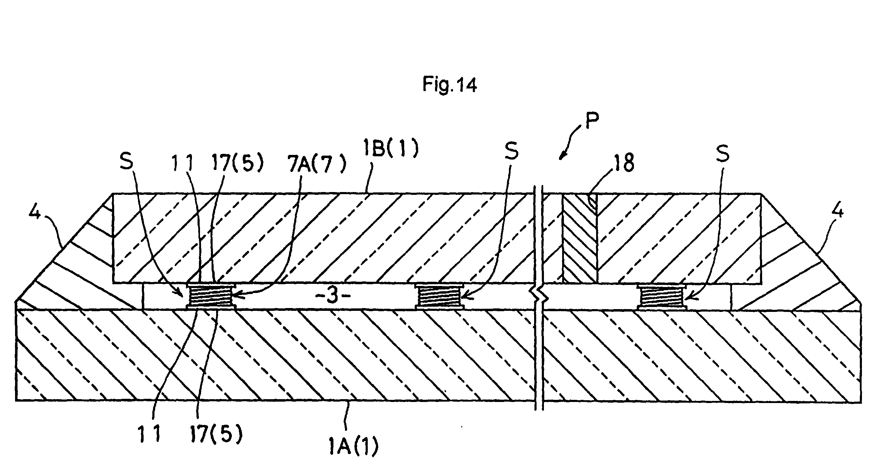

FIG. 14 is a partially eliminated vertical section of the glass panel shown in FIG. 13,
FIG. 15 is a vertical section showing principal portions of a spacer relating to the second embodiment,
FIGS. 16 through 21 are perspective views showing further spacers,
FIG. 22 and FIG. 23 are a perspective view and a side view showing a further spacer,
FIG. 24 and FIG. 25 are a perspective view and a side view showing a further spacer,
FIGS. 26 through 28 are vertical sections showing further spacers,
FIG. 29 is a side view showing a further spacer,
FIGS. 30 through 33 are perspective views showing further spacers,

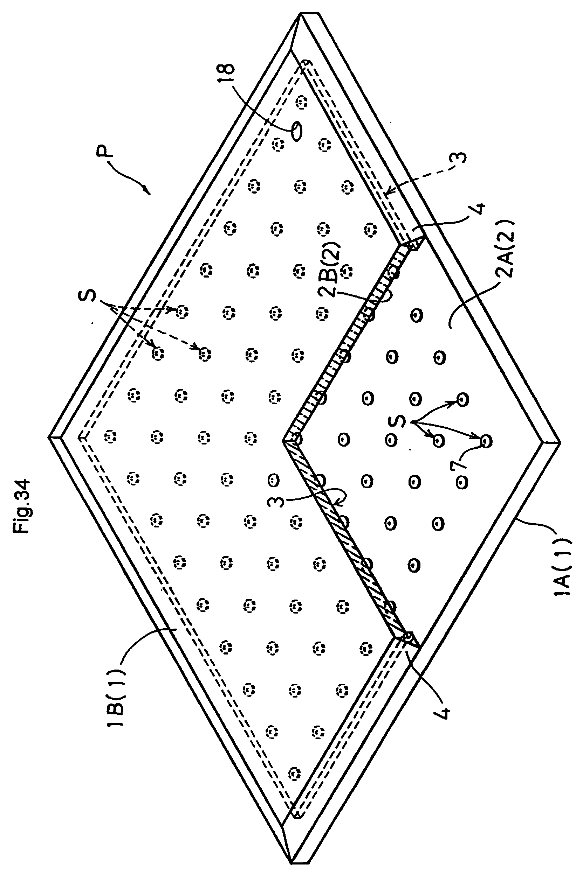

FIG. 34 is a partially cutaway perspective view showing an example of a glass panel relating to a third embodiment,

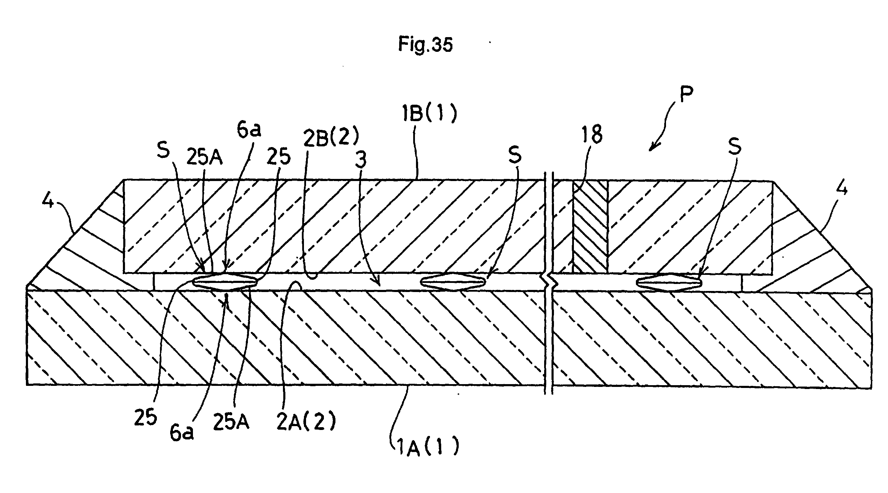

FIG. 35 is a partially eliminated vertical section of the glass panel shown in FIG. 34,
FIG. 36 is a vertical section showing principal portions of a spacer relating to the third embodiment,
FIG. 37 is a vertical section illustrating the function of the spacer shown in FIG. 36,
FIG. 38 is a plan view of the spacer shown in FIG. 36,
FIG. 39 is a vertical section showing principal portions of a further spacer,
FIG. 40 is a vertical section illustrating the function of the spacer shown in FIG. 39,
FIG. 41 is a plan view of the spacer shown in FIG. 39,
FIG. 42 is a side view showing a further spacer,
FIG. 43 is a side view in partial section showing a further spacer, and
FIGS. 44 through 47 are vertical sections of principal portions illustrating further spacers.

### BEST MODES OF EMBODYING THE INVENTION

The spacer S for a glass panel relating to the present invention will be described with reference to the accompanying drawings.

### [first embodiment]

A glass panel P shown in FIG. 1 and FIG. 2 includes one glass sheet 1A (1) and the other glass sheet 1B (1) disposed with a predetermined distance therebetween to form a gap 3 and an outer periphery sealing portion 4 provided along the entire peripheral edges of the glass sheets 1A, 1B for sealing the gap 3 under a depressurized condition, with a plurality of spacers S relating to the present invention being interposed between the opposing face 2A (2) of the one glass sheet 1A and the opposing face 2B (2) of the other glass sheet 1B for maintaining the opposing faces 2A, 2B with the predetermined distance therebetween.

As shown in FIG. 3, the above-described spacer S is formed of two curved faces 6 and fixedly clamped between the glass sheets 1A, 1B under the stable posture to maintain the opposing faces 2A, 2B with the predetermined distance therebetween. That is, in the case of the illustrated example, the spacer S is formed of two convex faces 6a and the thickness of the spacer S is rendered smaller than twice the curvature radius of the one convex face 6a.

Both of the two convex faces 6a are formed of convex spherical faces and these two partial spheres have circular cross section faces of a same radius, so that these partial spheres are assembled together with the cross section faces thereof bonded together, so that the assembly is provided in the form of a disc. The thickness of this disc-shaped spacer S is rendered smaller than the diameter of the partial spheres.

In the illustrated example, the thickness is rendered smaller than the radius of either one of the partial spheres. With this shape, when the spacer is supported on a horizontal face, the spacer assumes the most stable posture when the gravity center and the centers of the two convex spherical faces are both aligned along the perpendicular line. Accordingly, when the spacer S is supported on the opposing faces 2A, 2B of the glass sheets 1A, 1B, if this spacer S is uniformly formed, its peripheral edge 9, i.e. the circular portion forming the cross sectional faces, will be always maintained horizontally.

The same is true when the thickness of the spacer S is smaller than twice the radius of either one convex spherical face. This is because the distance from the gravity center of the spacer S to the two spherical faces is minimum at the center of the spherical faces.

With the spacer S formed in the manner described above, the spacer S can resist rolling thereof once disposed in the predetermined manner on the other opposing face 2A, 2B of the glass sheet 1B. Then, inadvertent displacement of the spacer S on the opposing faces 2A, 2B other than its horizontal skidding thereof may be restricted. When the one glass sheet 1A is superposed thereon to form the glass panel P, the opposing face 2A, 2BA of the one glass sheet 1A will be disposed at the predetermined position relative to the other opposing face 2A, 2B. Moreover, since the spacer S is clamped under the predetermined posture between the glass sheets 1A, 1B, the distance between the two opposing faces 2A, 2B may be maintained at the predetermined distance.

### [alternate embodiments relating to first embodiment]

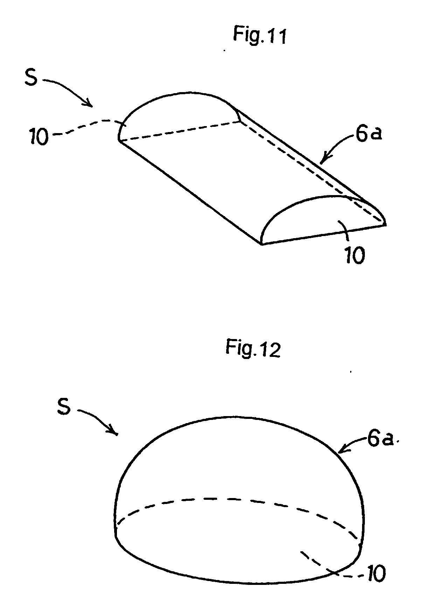

〈1〉 The above-described embodiment involves mainly the case where the plurality of curved faces 6 of the spacer S are provided in the form of convex spherical faces 6a projecting in the opposite directions. Instead, as shown in FIG. 4 and FIG. 5, one curved face 6 may be formed as a concave face 8. That is, while the convex face 6a comes into contact with the opposing face 2A of the glass sheet 1, the concave face 8 will come into contact with the opposing face 2A, 2B only through its peripheral edge 9. Thus, as long as the concave face 8 does not project from the peripheral edge 9 toward the opposing face 2A, 2B, this may be provided in any shape.
   With such form as above, when the spacer is damped between the opposing faces 2A, 2B of the glass sheets 1A, 1B for maintaining the opposing faces 2A, 2B with the predetermined distance therebetween, as such shape can resist rolling, the spacer assumes the most stable posture when its concave face 8 is placed on the opposing face 2A of the glass sheet 1.
   On the other hand, if supported on the side of the convex face 6a, the spacer will assume the stable posture when the peripheral edge 9 is substantially horizontal. Then, the distance between the opposing faces 2A, 2B may be constantly maintained to the predetermined distance.
〈2〉 For forming the plurality of curved faces 6 in the spacer S, the foregoing embodiment involves mainly the case where the convex faces 6a are formed of the convex faces which project in the opposite directions. Instead, as shown in FIG. 6 and FIG. 7, for example, a portion of the surface of the spacer S may be formed of a planar portion 10 and a convex portion 6a which extends continuously from the outer periphery of the planar portion 10. And, when the spacer S as disposed still under the stable posture and damped between the glass sheets 1A, 1B, the planar portion 10 should come into contact with one of the opposing faces 2A, 2B.
   In forming such shape, it is further preferred that the height H between the planar portion 10 and the top of the convex face 6a is rendered smaller than the width W of the planar portion 10. That is, if the planar portion 10 extending continuously from the convex face 6a is formed, as the spacer is disposed still with the planar portion 10 contacting the other opposing face 2A, 2B of the glass sheet 1B disposed horizontally, the gravity center of the spacer S may be readily located on this contacting planar portion 10, it is easy for the spacer S to assume its stable posture.
   Moreover, if the spacer S is provided in the form of a disc as shown, the posture where the planar portion 10 is located downwardly is the most stable posture. And, under the posture where the spacer is supported through the convex face 6a, the spacer will be stabilized under the posture where the planar portion 10 is disposed substantially parallel to the other opposing face 2A, 2B. Then, if the one glass sheet 1A is superposed thereon, its opposing face 2A, 2B will readily come into contact with the planar portion 10.
   And, if the height H from the top of the convex face 6a to the planar portion 10 is set smaller than the width W of the minor axis of the outer peripheral portion, i.e. the width W of the disc, the condition supported through the outer periphery by the opposing face 2A, 2B will be extremely unstable, so that the spacer S will be even less likely to roll.
〈3〉 In the case of 〈2〉 above, as shown in FIG. 12 for instance, the convex face 6a may be provided in the form obtained by rotating an oval rotated about its minor axis and then cutting it along a plane perpendicular to its rotational axis.
   Further, the curvature radius of the curved face located adjacent the outer periphery of the planar portion 10 may be rendered small.
   Moreover, the spacer may be provided in the form obtained by rotating an oval about its major axis and then cutting it along a plane perpendicular to its rotational axis. All of these constructions have the same feature as the above.
〈4〉 The spacer S relating to this embodiment, as shown in FIG. 10 for example, may be provided in the form of a cylinder or a tube having an oval or elliptical cross section. With these too, its rolling may be restricted and it may assume the stable posture with the fixed height. In these, the cylindrical or tubular side face forms the convex face 6a and its opposed end faces form the planar portions 10, respectively.
   Further, in the case also of a spacer formed by cutting a cylindrical or tubular member along a plane including its generator (see FIG. 11), its rolling tendency may be restricted and its posture of the fixed height may be stabilized. In these cases, the cylindrical or tubular side face forms the convex face 6a and the cut face forms the planar portion 10, respectively.
〈5〉 For forming the plurality of curved faces 6 in the spacer S, the foregoing embodiment involves mainly the case where the convex spherical face projecting in the opposite directions provides the convex face 6a. Instead, as shown in FIG. 8 for instance, the spacer S may be provided in the form of a regular polyhedron. More preferably, as shown in FIG. 9, this may be provided in the form of the regular tetrahedron.
   In addition to the above, it may be provided in the form of any one of the regular octahedron, regular dodecahedron, and the regular icosahedron. Since all of these have parallel sides and the distances therebetween are same, they provide the equal height under all of their stable postures. Accordingly, as the spacer is disposed still at any desired position and clamped between the opposing faces 2A, 2B, it may easily maintain the opposing faces 2A, 2B with the predetermined distance therebetween. In this regard, the smaller the number of its sides, the lower its tendency of rolling. Therefore, fewer sides are preferred for stabilization of the position of the spacer S.
〈6〉 In the case of 〈3〉 above, the respective sides (edges) may be chamfered or R-chamfered.. FIG. 8 shows a case where each edge is R-chamfered, and FIG. 9 shows another case where each edge is flat chamfered.
   Incidentally, it is needless to say that they may be without such chamfers. Still alternatively, it is also possible to form unevenness in each side. In this case of providing unevenness in each side, this should not change the disposing distance. The disposing distance will not be changed even when each side is formed as a concave face.
〈7〉 The spacer S may include upper and lower planar faces and a plurality of curved side faces 6. In the case of these shapes, it is even preferred that its sides bulge sideways, since this will further destabilize the support through the sides. It is understood that all these constructions are encompassed within the scope of the invention relating to claim 1 and these too provide the same characteristics as the above respective embodiments.

### [second embodiment]

Next, the second embodiment of the spacer S for a glass panel P relating to the present invention will be described with reference to the accompanying drawings.

The glass panel P relating to the second embodiment, shown in FIG. 13 and FIG. 14 includes a pair of glass sheets 1A, 1B disposed with a predetermined distance therebetween to form a gap 3 and an outer periphery sealing portion 4 provided along the entire peripheral edges of the glass sheets 1A, 1B for sealing the gap 3 under a depressurized condition, with a plurality of spacers S relating to the present invention being interposed between the opposing faces 2A, 2B of the glass sheets 1A, 1B for maintaining the opposing faces 2A, 2B with the predetermined distance therebetween.

The spacer S interposed between the opposing faces 2A, 2B, as shown in FIG. 15, includes a pair of contacting portions 5 capable of coming into contact with the opposing faces 2A, 2B respectively and an elastic portion 7 interposed between these contacting portions 5. This elastic portion 7 is formed by curving a wire member 23 in the form of spiral so as to form a coil spring 7A which is a reel spring, and the elastic portion being depressible in the mutually approaching direction of the two contacting portions 5.

In this coil spring 7A, the contacting portions 5 are formed of contacting plate members 17 having glass-sheet contacting faces 11 capable of coming into the opposing faces 2A, 2B respectively.

Referring to one specific example of the above construction, the coil spring 7A and the contacting plate members 17 will be formed of a thin wire and thin plates both of which are made of stainless steel (e.g. SUS304). The coil spring 7A may employ e.g. a thin stainless steel wire having 5 *µ*m diameter and wound five turns in the turning diameter of 150*µ*m. And, the contacting plate member 17 may employ the thin stainless steel plate having the plate thickness of 5 *µ*m and formed into a 200*µ*m disc. Then, the wire and plate are fused and assembled together to form the spacer S.

With the above-described construction, those portions of the opposed ends of the coil spring 7A forming the elastic portion 7 which portions are not formed of faces come into face contact with the opposing face 2A of the glass sheet 1 through the glass-sheet contacting face 11 of the contacting plate member 17 and the opposed contacting portions 5 are capable of compressive deformation in the mutually approaching direction. Then, even when the flatness of the opposing face 2A of the glass sheet 1 is insufficient to provide slight variation in the distance, the compression reaction force of the coil spring 7A may bring the glass-sheet contacting faces 11 into pressed contact against the opposing faces 2A, 2B. And, this position is maintained stable and also relative displacement between the opposing faces 2A, 2B in the mutually approaching direction due to application of an external force to the glass panel P may be allowed.

Moreover, when the inter-turn distance of the coil spring 7A becomes zero, the coil spring will not be deformed any further. Hence, when the spacer S is compressed maximally, the sum of the thickness in the coil axis direction and the thickness of the two contacting plate members 17 becomes the minimum distance (35*µ*m in the above case) between the opposing faces 2A, 2B, whereby the distance between the opposing faces 2A, 2B may be maintained at the predetermined distance (e.g. 35*µ*m or more). And, since the spacer comes into contact with the opposing faces 2A, 2B through the glass-sheet contacting faces 11, contact with the glass through sharp edges may be avoided, so that damage to the two glass sheets may be prevented.

### [alternate embodiments relating to second embodiment]

〈1〉 In the case of the spacer S relating to the second embodiment, as shown in FIG. 29 for instance, the spacer S may be formed of the cylindrical coil spring 7A alone, without the contacting plate members 17. In this case, the opposed ends of the coil spring 7A will form the contacting portions 5. Accordingly, in the above spacer S, the contacting portion 5 will be formed annular. However, as the space comes into contact with the opposing faces 2A, 2B respectively through the opposed ends, damage to the glass sheets may be prevented.
〈2〉 In the case of the spacer S relating to the second embodiment, as shown in FIG. 30 for instance, the wire member 23 having a circular cross section may be curved in the form of spiral with its turning radius progressively decreasing in one direction along the turning central axis P, so as to form the spacer S. If the spacer is formed such that the turns of the coiled wire member 23 having such progressively decreasing diameter are accommodated within the larger-diameter turns of the wire member as shown, when the distance between the opposing faces 2A, 2B of the glass sheets 1A, 1B becomes minimum, the wire member 23 comes into contact with the two opposing faces 2A, 2B through the entire length thereof, so that the minimum distance between the opposing faces 2A, 2B may be restricted by means of the wire diameter of the wire member 23.
   Moreover, when the external force is at its maximum, the wire member 23 comes into contact with the opposing faces 2A, 2B through the entire length of the member. Thus, stress concentration to the glass sheets 1 may be avoided.
〈3〉 In the case of the spacer S relating to the second embodiment, as shown in FIGS. 16 through 19 for instance, the spacer S may be formed by forming the elastic portion 7 of a folded or bent planar member 12 made of elastic material.
   In the case of example shown in FIG. 16, the planar portion 12 includes, at opposed ends thereof, glass-sheet contacting portions 11 capable of coming into contact with the opposing face 2a of the one glass sheet 1A. This glass-sheet contacting face 11 functions as one contacting portion 5A formed of a planar portion 12a. The spacer S is folded or bent at three intermediate positions thereof so as to form the elastic portion 7 having an inverse V shaped cross section. This construction may be reversed upside down. The bent portion 12b bent in the V shape is provided as the other contacting portion 5B capable of coming into contact with the opposing face 2B of the other glass sheet 1B.
   In the case of example shown in FIG. 17, the planar member 12 includes, at opposed ends thereof, contacting portions 5 formed of planar portions 12a having glass-sheet contacting faces 11 capable of coming into contact respectively with the opposing faces 2A, 2B of the glass sheets 1A, 1B and also the intermediate portion of the member is bent at four positions so as to form the elastic portion 7 having an N shaped cross section. Further, two of the bent portions 12b provide the contacting portions 5 capable of coming into contact respectively with the opposing faces 2A, 2B.
   In the case of example shown in FIG. 18, the planar member 12 includes, at opposed ends thereof; contacting portions 5 formed of planar portions 12a having glass-sheet contacting faces 11 capable of coming into contact respectively with the opposing faces 2A, 2B and also the intermediate portion of the member is bent at two positions so as to form the elastic portion 7 having a Z shaped cross section.
   In the case of example shown in FIG. 19, the planar member 12 includes, at opposed ends thereof; one contacting portion 5A formed of a planar portion 12a having a glass-sheet contacting face 11 capable of coming into contact with the opposing face 2A of the one glass sheet 1A, and the intermediate portion of the member is bent at five positions so as to form the elastic portion 7 having a W shaped (or M shaped) cross section. Further, two of the W-shaped bent portions 12b provide the other contacting portion 5B, and the other bent portion 12b provides the one contacting portion 5A.
   With any one of the shapes described above, the bent angle of each bent portion 12b varies elastically, and also the intermediate portion of the planar member between the bent portions 12b elastically flexes. Hence, if this is interposed with compressive deformation in the mutually approaching direction of the two opposing faces 2A, 2B, in the event of slight variation in the distance between the opposing faces 2A, 2B, the contacting portions 5 will be pressed against the opposing faces 2A, 2B by means of the elastic reaction force against this compressive deformation. In this condition, even when an external force is applied to the glass panel P to vary the distance between the opposing faces 2A, 2B, this can be coped with.
   Further, in the case of the examples shown in FIG. 16, FIG. 17 and FIG. 19, the distance between the opposing faces 2A, 2B is restricted when the planar member 12 is deformed substantially flat. And, in the case of the example shown in FIG. 18, the distance between the opposing faces 2A, 2B is restricted when the planar member 12 is substantially folded. Accordingly, when the external force is at its maximum, the planar member 12 comes into contact with the opposing faces 2A, 2B through the entire length of the member, so that stress concentration to the glass sheets 1 may be prevented.
   Incidentally, although all of the spacers S of the illustrated examples include the bent portions 12b formed by bending the rectangular planar member 12, the planar portion 12a may have any other desired plan shape such as circular, oval, elliptical, polygonal, etc.
   Also, the planar member 12 may have any different shape such as circular, oval, elliptical or the like, than that illustrated in the drawings.
〈4〉 In the case of the spacer S relating to the second embodiment, as shown in FIG. 20 for example, the elastic portion 7 may be formed by curving the planar member 12 made of elastic material. In the case of the example shown in FIG. 20, the opposed ends of the planar member 12 are formed as the contacting portions 5. These contacting portions 5 are capable of coming into contact with the opposing faces 2A, 2B of the glass sheets 1A, 1B, respectively. For instance, the contacting portions 5 will be formed e.g. of planar portions 12a having glass-sheet contacting faces 11 which are interconnected via a curved portion 12c. This curved portion 12c functions as the elastic portion 7.
   Further, in the case of the example shown in FIG. 21, two curved portions 12c are formed between the opposed contacting portions 5. With this construction too, as the curved portions 12c are elastically deformed to have a smaller curvature radius, the construction may be deformed such that the contacting portions 5 are elastically moved closer to each other.
   Such construction is not limited to those shown in the drawings, and the number of the curved portions 12c may be further increased. Further, the bent portion 12b employed in the examples shown in FIG. 16 and others may be replaced by the curved portion 12c. With such constructions, in association with elastic deformation of the curved portion 12c toward the greater curvature radius, they may be deformed such that the contacting portions 5 are elastically moved closer to each other.
   Incidentally, although all of the spacers S of the illustrated examples include the bent portions 12c formed by bending the rectangular planar member 12, the planar portion 12a may have any other desired plan shape such as circular, oval, elliptical, polygonal, etc.
   Also, the planar member 12 may have any different shape such as circular, oval, elliptical or the like, than that illustrated in the drawings. With these constructions, in response to slight displacement between the opposing faces 2A, 2B, the elastic reaction force of the spacer S resulting from its compressive deformation will serve to press the contacting portions 5 against the opposing faces 2A, 2B. Under this condition, if an external force is applied to the glass panel P, resulting in change in the distance between the opposing faces 2A, 2B, the construction can cope with this change. Moreover, since no further deformation beyond the range permitted by the curved portion 12c is possible, the construction functions as the space S for regulating the distance between the opposing faces 2A, 2B.
〈5〉 In the case of the spacer S relating to the second embodiment, as shown in FIG. 22 and FIG. 23 for example, the spacer may be formed by curving an annular member 13 in the form of torus along the plane of curving this annular member 13 so as to form elastically deformable two projections along the length of its center axis C. As shown in FIG. 23, the annular member 13 is curved to project in the direction of the center axis C.
   Incidentally, as shown in FIG. 24 and FIG. 25, the annular member 13 may be curved to project at three positions in the direction of the center axis C. That is, the annular member may be curved to project at any desired number of positions. With such constructions, the contacting portion 5 for coming into contact with the opposing face 2A of the one glass sheet 1A is formed of the tops of the curved projections. Then, as the curving in the direction of the center axis C provides the elasticity in the direction of the center axis C, the curved projections in the direction of the center axis C may function as the elastic portion 7.
   Accordingly, in response to slight displacement between the opposing faces 2A, 2B, the elastic reaction force of the spacer S against the compressive deformation will bring the contacting portion 5 into the pressed contact with the opposing faces 2A, 2B. And, under this condition, if the distance between the opposing faces 2A, 2B is varied due to application of an external force to the glass panel P, this may be coped with.
   Moreover, the annular member 13 reaches its most compressed state when it is deformed into the annular shape with depression of the curve projections, so that the distance between the opposing faces 2A, 2B may be restricted by the thickness of the annular member 13 in the direction of the center axis C.
   Incidentally, in both of the examples shown in the two drawings, the annular member 13 has a circular shape in the plan view. This shape in the plan view may be oval, elliptical, or the like. Further, the elastic portion 7 may be formed to have a straight shape in the plan view. In all of these cases, the direction of the curving center axis of the annular portion 13 excluding the elastic portion 7 will be referred to as the center axis C direction.
〈6〉 In the case of the spacer S relating to the second embodiment, as shown in FIG. 26 and FIG. 28, the annular member 13 may be formed by deforming an inner peripheral edge 15 of an annular flat plate made of elastic material from its outer peripheral edge 14 along the center axis C direction.
   FIG. 26 shows an example in which the spacer S is provided in the form of a belleville spring having a conical surface. FIG. 27 shows an example in which the spacer S is provided in the form of a belleville spring formed by rotating a curved line convex toward the outside. FIG. 28 shows another example in which the spacer S is provided in the form of a belleville spring formed by rotating a curved line concave toward the inside. In all of these cases, the inner peripheral edge 15 and the outer peripheral edge 14 form the contacting portions 5 capable of coming into contact with the opposing faces 2A, 2B of the glass sheets 1A, 1B respectively, and the entire construction forms the elastic portion 7 elastically deformable in the center axis direction C.
   Therefore, an elastic reaction force is developed in each of the opposing faces 2A, 2B of the glass sheets 1A, 1B in the center axis C direction which is the perpendicular direction. Therefore, even when there exists some non-uniformity in the distance between the opposing faces 2A, 2B, or when the distance between the opposing faces 2A, 2B is varied as an external force is applied to the glass panel P under this condition, the construction may follow this. Moreover, since the distance between the two contacting portions 5 is greater at least than the thickness of the flat plate, the distance between the opposing faces 2A, 2B may be regulated.
〈7〉 In the case of the spacer S relating to the second embodiment 2, as shown in FIG. 31 for example, the contacting portion 5 may be formed of an annular contacting member 16 capable of coming into contact, along the entire periphery thereof, with the one opposing face 2A, 2B.
   That is to say, in the case of the illustrated construction, the elastic portion 7 is formed of a wire member 23 which extends with an offset from the annular contacting member 16 in the center axis P direction. As shown, if the wire member 23 is provided with a thickness smaller than that of the annular contacting member 16 and this is accommodated within the annular contacting member 16 when being compressed between the opposing faces 2A, 2B, the condition when the opposing faces 2A, 2B are closest to each other corresponds to the condition when the opposing faces 2A, 2B come into contact with the opposed sides of the annular contacting member 16. So that, the distance between the opposing faces 2A, 2B may be regulated by means of the thickness of the annular contacting member 16 in the center axis P direction.
   Incidentally, a plate member may be employed in place of the wire member 23. In this case too, it is preferred that the member be accommodated within the inner diameter of the annular contacting member 16.
〈8〉 In addition to the above, as shown in FIG. 32 and FIG. 33 for example, the spacer S may be constructed by cutting away a portion of a planar member 12 made of elastic material and having a glass-sheet contacting face 11 capable of coming into contact with the opposing face 2A of the one glass sheet 1A and then causing this portion to project from the one glass-sheet contacting face 11 so as to form the elastic portion 7.
   According to this construction, the elastic portion 7 will include the other glass-sheet contacting face 11 capable of coming into contact with the opposing face 2B of the other glass sheet 1B. With this construction too, as this spacer S formed of the planar member 12 is clamped between the opposing faces 2A, 2B with application thereto of a compressive strain in the direction of deforming the spacer S flat there is developed an elastic reaction force in each of the opposing faces 2A, 2B of the glass sheets 1A, 1B. Therefore, even when there exists some non-uniformity in the distance between the opposing faces 2A, 2B, or when the distance between the opposing faces 2A, 2B is varied as an external force is applied to the glass panel P under this condition, the construction may follow this. Moreover, since the distance between the two glass-sheet contacting faces 11 cannot be smaller at least than the thickness of the planar member 12, the distance between the opposing faces 2A, 2B may be regulated.
〈9〉 The material of the space S is not limited to the particular stainless steel described in the foregoing embodiments. It may be any other kind of stainless steel, or nickel alloy containing nickel-base superalloy such as Inconel Alloy 718, or even any other metal, silica glass, ceramics or the like. In short, it may employ any material if it can regulate the distance between the glass sheets 1A, 1B so as to keep them away from each other when subjected to an external force and it is also elastically deformable. Incidentally, even with ceramics, it may be elastically deformable if it is formed extremely thin or extremely narrow.

### [third embodiment]

A glass panel P relating to the third embodiment, shown in FIG. 34, includes a pair of glass sheets 1A, 1B disposed with a predetermined distance therebetween to form a gap 3 and an outer periphery sealing portion 4 provided along the entire peripheral edges of the glass sheets 1A, 1B for sealing the gap 3 under a depressurized condition.

For forming the gap 3, spacers S are interposed between the opposing faces 2A, 2B of the glass sheets 1A, 1B to keep the opposing faces 2A, 2B at the predetermined distance therebetween, and low-melting glass is fused along the entire peripheral edges of the glass sheets 1A, 1B to form the outer periphery sealing portion 4.

For rendering the gap 3 into depressurized condition, the outer peripheral sealing portion 4 is formed to seal the outer periphery and then by sucking and exhaust air from an inlet opening 18 and low-melting glass is fused to the inlet opening 18 so as to seal this opening as well (see FIG. 35).

The spacer S, as shown in FIG. 36 through FIG. 38, includes two convex faces 6a for coming into contact with the opposing faces 2A, 2B respectively. These convex faces 6a are portions of a virtual sphere 19 which forms one spherical face. The convex faces 6a will be clamped between the glass sheets 1A, 1B in contact with the opposing faces 2A, 2B respectively, thereby to keep the opposing faces 2A, 2B with the predetermined distance therebetween. The spacer S is pivotable so as to allow relative displacement in the direction along the opposing faces 2A, 2B through change of their positions contacting the convex faces 6a, without necessitating relative slippage between the spacer S and the glass sheets 1A, 1B.

Further, in a direction intersecting the center axis C extending through the upper and lower convex faces 6a, there is formed a bulging portion 25 which is bulged to have a thickness in the center axis C direction smaller than the diameter of the spherical face, i.e. the diameter of the virtual sphere 19.

The bulging portion 25 includes, along the entire periphery thereof about the center axis C, an inclined portion 25A which extends integrally and continuously with the opposed convex faces 6a, so that this spacer S is provided in the form of disc. The inclined portion 25A, as shown in its section in FIG. 36, has its both upper and lower faces thereof formed of conical faces having a large conical angle and circumscribing the virtual sphere 19, so that the entire outer face thereof is formed as a continuous face.

With the spacer S having the above-described construction, when the spacer contacts the opposing faces 2A, 2B through its convex faces 6a, the distance between the opposing faces 2A, 2B may be maintained fixed in the event of relative displacement between the glass sheets 1A, 1B.

Further, as the upper and lower faces of the inclined portion 25A are formed of the conical faces circumscribing the virtual sphere 19 and oriented in the opposite directions. Thus, as shown in FIG. 37, the spacer S may be inclined until its inclined portion 25A comes into contact with the opposing faces 2A, 2B. When the spacer S is inclined maximally, it comes into contact with the opposing faces 2A, 2B along the generating line of the conical faces. Accordingly, rolling of the spacer S may be prevented by means of the convex faces 6a formed of portions of the virtual sphere 19.

### [alternate embodiments relating to third embodiment]

〈1〉 In the case of the spacer S relating to the third embodiment as shown in FIG. 39 and FIG. 41 for instance, the convex faces 6a are formed on upper and lower portions of the one virtual sphere 19 and in a direction traversing the center axis C extending through these upper and lower convex faces 6a, a bulging portion 25 may be formed to have the thickness in the center axis C direction smaller than the diameter of the virtual sphere 19. In three directions intersecting the center axis C extending through the upper and lower convex faces 6a, there may be formed such three bulging portions 25 each having an outer peripheral face circumscribing the virtual sphere 19 and a conical face having the thickness in the center axis C direction, i.e. the smaller diameter, smaller than the diameter of the sphere.
   With such construction, as the upper and lower convex faces 6a are formed as portions of the common virtual sphere 19, if the spacer contacts the opposing faces 2A, 2B of the glass sheets 1A, 1B through the convex faces 6a, the distance between the opposing faces 2A, 2B may be maintained to the diameter of the virtual sphere 19.
   Further, as the bulging portion 25 is provided in the direction intersecting the center axis C extending through the two convex faces 6a, when this spacer S is inclined, the spacer will come into contact with the opposing faces 2A, 2B through the inclined portions 25A (see FIG. 40). Therefore, rolling of the spacer S may be prevented.
   Further, as the vertical thickness of the bulging portion 25 is rendered smaller than the diameter of the virtual sphere 19, a pivotal movement of the spacer S is allowed and at the same time its pivot angle may be regulated. Further, as such bulging portions 25 are formed equidistantly in the three directions in the peripheral direction of the virtual sphere 19, rolling in any direction may be restricted.
   Incidentally, in the illustrated example, the bulging portions 25 are formed to bulge in the direction perpendicular to the center axis C. Instead, they may bulge with an inclination relative thereto. Further, the number of the bulging portions 25 is not limited to three, but may be more than four. Moreover, the larger-diameter of the conical face may be smaller than the larger-diameter of the circumscribing conical face.
〈2〉 In the case of the spacer S relating to the third embodiment, the bulging portion 25 may be formed of an inclined portion 25A which extends, through the entire periphery thereof, integrally and continuously with the opposed convex faces 6a about the center axis C.
   For instance, as shown in FIG. 42, the upper and lower convex portions 6a will be formed respectively, and a disc-shaped bulging portion 25 will be formed along the entire periphery of the virtual sphere 19 about the center axis C extending through the opposed convex faces 6a. Then, the inclined portion 25A will be formed in the outer periphery of this bulging portion 25. This inclined portion 25A is capable of coming into contact with the opposing faces 2A, 2B so as to restrict inclination of the spacer S.
   Moreover, as the inclined portion 25A is formed integrally and continuously with the opposed convex portions 6a, its strength may be maintained high so as to prevent damage such as breaking of this bulging portion 25.
〈3〉 In the case of the spacer S relating to the third embodiment, as shown in FIG. 43 for example, the upper and lower convex portions 6a may be formed of portions of the surface of spheroid.
   In this case, the spacer S is provided in the form of spheroid formed by rotating a semi-oval about its minor axis.
   In the case of the illustrated example, the spacer S has the shape of spheroid obtained by rotating a semi-oval cut along its minor axis J and rotated, so that this spacer S has a disc-like shape. With this shape, the spacer will be unstable on a horizontal surface except under the posture where the minor axis J is oriented substantially perpendicular. Then, the spacer S will tend to assume the posture where the minor axis J is oriented substantially perpendicular. Moreover, as this spacer S does not roll, the spacer S may be readily disposed on the opposing face 2A of the glass sheet 1.
   Further, as the upper and lower convex faces 6a come into contact with the opposing faces 2A, 2B, in the event of possible relative displacement between the glass sheets 1 along the opposing faces 2A, 2B, the spacer S will be inclined without slippage between the convex faces 6a and the opposing faces 2A, 2B.
〈4〉 In the case of the spacer S relating to the third embodiment as shown in FIG. 44 and FIG. 45 for example, the spacer S may include contacting plate members 17 for coming into contact with the opposing faces 2A, 2B respectively and a deformation allowing member 26 interposed between the two contacting plate members 17 for allowing relative displacement between the opposing faces 2A, 2B in the direction along these faces. With such construction, the two contacting plate members 17 may be moved with the opposing faces 2A, 2B respectively. Accordingly, although this spacer S does not incline, the relative displacement between the glass sheets 1A, 1B may be allowed, without slippage between the contacting plate members 17 and the opposing faces 2A, 2B (see FIG. 45).
   In the course of the above, as there is developed no shearing strain inside the glass sheets 1A, 1B, damage of the two glass sheets 1 may be prevented, and at the same time, as the deformation allowing member 26 is adapted to allow shearing deformation of its own, damage of the spacer S per se too may be prevented.
〈5〉 In the above 〈4〉, the deformation allowing member 26 may be formed of a transverse elastic member. For example, as shown in FIG. 46 and FIG. 47, the spacer S may be constructed such that the deformation allowing member 26 interposed between the opposed contacting plate members 17 is formed of the transverse elastic member.
   With such construction, when the glass sheets 1A, 1B are displaced relative to each other along the opposing faces 2A, 2B, the deformation allowing member 26 will provide its elastic shearing deformation. As a result, the contacting plate members 17 may be moved relative to each other, without varying the distance between the contacting plate members 17.
   Moreover, as the deformation allowing member 26 has elastic resilience, when the spacer S is disposed on the opposing face 2A of the glass sheet 1, it may be disposed at the neutral position of the deformation allowing member 26, i.e. under such condition as its shearing deformations in both directions are the same.
〈6〉 The deformation allowing member 26 in 〈4〉 above may be constructed of a laminated assembly of film elements made of material having low frictional resistance. With this construction too, the same effect as 〈4〉 above may be attained.
〈7〉 The deformation allowing member 26 in 〈4〉 above may be constructed of planar members 27 formed of rigid material and superposed to be movable relative to one another between the contacting plate members 17. For instance, as shown in FIG. 46 and FIG. 47, the spacer S may be constructed with forming the deformation allowing member 26 by superposing the planar members 27 made of rigid material to be slidable to one another between the pair of contacting plate members 17.
   With such construction, in the event of relative displacement along the opposing faces 2A, 2B, the two contacting plate members 17 may be moved with the glass sheets 1A, 1B without resistance (see FIG. 47).
   Moreover, as the planar members 27 are made of rigid material, it is possible to maintain fix the distance between the opposing faces 2A, 2B.
   Incidentally, if the two contacting plate members 17 are connected to each other, with the superposed planar members 27 being interposed therebetween, these members may be handled together when this spacer S is to be disposed on the opposing face 2A of the glass sheet 1, so that the handling may be facilitated. For instance, by forming a hole in each planar member 27 and providing a connecting member within this hole for interconnecting the contacting plate members 17, the spacer S may provide its function reliably.
〈8〉 In 〈6〉 above, the number of the planar members 27 may be determined as desired. A single planar member 27 may be slidably interposed between the contacting plate members 17.

### [alternate embodiments relating commonly to first through third embodiments]

The glass panel employing the spacers relating to the first through third embodiments described above may employ other types of glass sheets to be described next.
〈1〉 In the foregoing embodiment, the glass sheet was not described in details. However, its material and dimensions may be determined as desired. And, the kind of glass may be employed if desired. For instance, it may be figured glass, frosted glass (glass provided, through a surface treatment thereof, with the function of diffusing light), wired glass, tempered glass, glass sheet provided with the function of heat absorption, ultraviolet absorption, heat reflection or the like, or any combinations of these.
〈2〉 Further, as for the composition of the glass, it may be sodium silicate glass (soda lime silica glass), boric silicate glass, aluminosilicate glass, or various kinds of crystallized glass.
〈3〉 The glass sheets are not limited to those in which the first glass sheet 1A and the second glass sheet 1B have different lengths or widths. Instead, the glass sheets may be of same dimensions. And, the superposing manner of the first glass sheet 1A and the second glass sheet 1B may alternatively be such that the peripheral edges thereof are superposed in alignment with each other. Or, the glass panel P may be constructed by assembling one glass sheet and the other glass sheet which differ in the thickness thereof.

### INDUSTRIAL APPLICABILITY

The spacers for a glass panel relating to the present invention may be used for a variety of applications. For example, the glass panel P using the spacers S of the invention may be used for buildings, vehicles (windowpane of automobile, windowpane of railway cars, windowpane of ship), instrument components (surface glass of a plasma display, door or wall of a refrigerator, door or wall of a heat reserving device).

## Claims

1. In a glass panel (P) including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer includes two or more curved faces (6) and is disposed still under a stable posture thereof and clamped between the pair of glass sheets (1A, 1B) so as to maintain the opposing faces (2A, 2B) with the predetermined distance therebetween.

2. The spacer for a glass panel according to claim 1, wherein the spacer includes two convex faces (6a) and its thickness is smaller than twice the curvature radius of one convex face (6a).

3. In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer comprises the assembly of a planar portion (10) and a convex face (6a) which extends continuously from the outer periphery of the planar portion (10), and when the spacer is disposed still under its stable posture and clamped between the glass sheets (1A, 1B), the planar portion (10) comes into contact with one of the opposing faces (2A, 2B).

4. The spacer for a glass panel according to claim 3, wherein the height between the planar portion (10) and the top of the convex faces (6a) relative to the planar portion (10) is rendered smaller than the width of the planar portion (10).

5. In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein said spacer is provided in the form of a regular polyhedron.

6. The spacer for a glass panel according to claim 5, wherein the spacer is provided in the form of a regular tetrahedron.

7. In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer includes a pair of contacting portions (5) capable of coming into contact with the opposing faces (2A, 2B) respectively, and an elastic portion (7) interposed between the pair of contacting portions (5), the elastic portion (7) being compressible in the mutually approaching direction of the two contacting portions (5).

8. The spacer for a glass panel according to claim 7, wherein said elastic portion (7) is provided as a bent planar member (12) formed of elastic material.

9. The spacer for a glass panel according to claim 7, wherein said elastic portion (7) is provided as a curved planar member (12) made of elastic material.

10. The spacer for a glass panel according to claim 7, wherein said elastic portion (7) is provided as an annular member (13) which is elastically deformable in the direction of the center axis thereof.

11. The spacer for a glass panel according to claim 10, wherein the annular member (13) is provided as an annular flat plate made of elastic material and including an outer peripheral portion (14) and an inner peripheral portion (15) which is offset in the direction of the center axis relative to the outer peripheral portion (14).

12. The spacer for a glass panel according to claim 7, wherein said elastic portion (7) is formed by curving a wire member (20) made of elastic material and curved in the form of a coil.

13. The spacer for a glass panel according to claim 12, wherein the spacer is provided as a wire member (20) made of elastic material and curved in the form of a coil which has a progressively reduced turning radius in one direction along the spiral axis.

14. The spacer for a glass panel according to any one of claims 7 through 13, wherein the contacting portion (5) is formed of a contacting plate member (17) having a glass-sheet contacting face (11) capable of coming into contact with the one opposing face (2A, 2B).

15. The spacer for a glass panel according to any one of claims 7 through 13, wherein the contacting portion (5) is formed of an annular contacting member (16) which comes into contact with the one opposing face (2A, 2B) through the entire periphery thereof.

16. In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer includes a pair of convex faces (6a) coming into contact with the respective opposing faces (24, 2B), and as the spacer is clamped between the glass sheets (1A, 1B) with the two convex faces (6a) contacting the respective opposing faces (2A, 2B), the spacer is pivotable while maintaining the opposing faces (2A, 2B) with the predetermined distance therebetween.

17. The spacer for a glass panel according to claim 16, wherein the spacer includes a pair of upper and lower convex portions (6a) which form portions of a same sphere and a bulging portion (25) which projects in a direction intersecting the center axis extending through the upper and lower convex portions (6a), the thickness of the bulging portion (25) in the direction of the center axis being smaller than the diameter of the sphere.

18. The spacer for a glass panel according to claim 17, wherein the bulging portion (25) is formed of an inclined portion (25A) which extends integrally with the convex portions (6a) about the center axis C over the entire periphery thereof.

19. In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer is provided in the form of a spheroid.

20. In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer includes a pair of contacting portions (5) for coming into contact with the opposing faces (2A, 2B) respectively and a deformation allowing member interposed between the contacting portions (5) for allowing relative displacement between the opposing faces (2A, 2B) along these faces thereof.

21. The spacer for a glass panel according to claim 20, wherein the deformation allowing member is formed of a transverse elastic member.

22. The spacer for a glass panel according to claim 20, wherein the deformation allowing member is provided as planar members (27) formed of rigid material and superposed to be movable relative to one another between the contacting portions (5).

## Amended claims

### Amended claims under Art. 19.1 PCT

1. In a glass panel (P) including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer includes two or more curved faces (6) and is disposed still under a stable posture thereof and clamped between the pair of glass sheets (1A, 1B) so as to maintain the opposing faces (2A, 2B) with the predetermined distance therebetween.
2. The spacer for a glass panel according to claim 1, wherein the spacer includes two convex faces (6a) and its thickness is smaller than twice the curvature radius of one convex face (6a).
3. In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer comprises the assembly of a planar portion (10) and a convex face (6a) which extends continuously from the outer periphery of the planar portion (10), and when the spacer is disposed still under its stable posture and clamped between the glass sheets (1A, 1B), the planar portion (10) comes into contact with one of the opposing faces (2A, 2B).
4. The spacer for a glass panel according to claim 3, wherein the height between the planar portion (10) and the top of the convex faces (6a) relative to the planar portion (10) is rendered smaller than the width of the planar portion (10).
5. (amended) In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein said spacer is provided in the form of a regular polyhedron having at least one of a plurality of sides or apexes thereof chamfered.
6. (amended) In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer is provided in the form of a regular polyhedron which is in the form of a regular tetrahedron.
7. In a glass panel including a pair of glass sheets (1A, 1B) disposed with a predetermined distance therebetween to form a gap (3) and an outer periphery sealing portion (4) provided along the entire peripheral edges of the glass sheets (1A, 1B) for sealing the gap (3) under a depressurized condition;
a spacer for the glass panel to be interposed between opposing faces (2A, 2B) of the glass sheets (1A, 1B) for maintaining the opposing faces (2A, 2B) with the predetermined distance therebetween;
wherein the spacer includes a pair of contacting portions (5) capable of coming into contact with the opposing faces (2A, 2B) respectively, and an elastic portion (7) interposed between the pair of contacting portions (5), the elastic portion (7) being compressible in the mutually approaching direction of the two contacting portions (5).
8. The spacer for a glass panel according to claim 7, wherein said elastic portion (7) is provided as a bent planar member (12) formed of elastic material.
9. The spacer for a glass panel according to claim 7, wherein said elastic portion (7) is provided as a curved planar member (12) made of elastic material.
10. The spacer for a glass panel according to claim 7, wherein said elastic portion (7) is provided as an annular member (13) which is elastically deformable in the direction of the center axis thereof.
11. The spacer for a glass panel according to claim 10, wherein the annular member (13) is provided as an annular flat plate made of elastic material and including an outer peripheral portion (14) and an inner peripheral portion (15) which is offset in the direction of the center axis relative to the outer peripheral portion (14).
12. The spacer for a glass panel according to claim 7, wherein said elastic portion (7) is formed by curving a wire member (23) made of elastic material and curved in the form of a coil.
13. The spacer for a glass panel according to claim 12, wherein the spacer is provided as a wire member (20) made of elastic material and curved in the form of a coil which has a progressively reduced turning radius in one direction along the spiral axis.
